# EUROPÄISCHE PATENTANMELDUNG

(11) **EP 3 628 922 A1**
(43) Veröffentlichungstag der Anmeldung: **01.04.2020**
(21) Anmeldenummer: 18197469.2
(22) Anmeldetag: 28.09.2018
(51) Int. Cl.: F22B 37/02, F01D 25/00, C23F 11/14, F01K 7/06, F01K 7/18, F01K 21/06

(54) **VERFAHREN ZUR KONDITIONIERUNG EINER NIEDERDRUCKTEILTURBINE**

(71) Anmelder: Siemens Aktiengesellschaft, 80333 München (DE)
(72) Erfinder: Barnikel, Jochen, 45470 Mülheim an der Ruhr (DE); Ghicov, Andrei, 91058 Erlangen (DE); Luithle, Alexander, 44789 Bochum (DE)

(57) **Zusammenfassung**

Die Erfindung betrifft ein Verfahren zur Konditionierung eines Wasser-Dampf-Kreislaufes (1), wobei ein Amin, insbesondere Octadecylamin (ODA) kurz vor der Niederdruck-Teilturbine (15) oder nach einer letzten Schaufelstufe (30) in der Niederdruck-Teilturbine (15) zugeführt wird.

## Beschreibung

Die Erfindung betrifft ein Verfahren zur Konditionierung des Wasser-Dampf-Kreislaufs eines Kraftwerks, wobei das Kraftwerk eine Dampfturbine umfassend eine Hochdruck-Teilturbine, eine Mitteldruck-Teilturbine und eine Niederdruck-Teilturbine, bei dem dem im Wasser-Dampf-Kreislauf zirkulierenden Arbeitsmedium ein Amin als Filmbildner zudosiert wird, das auf einer Oberfläche einen hydrophoben Film bildet.

Kraftwerke werden zur Erzeugung elektrischer Energie eingesetzt. Dabei wird eine Primärenergie in elektrische Energie umgewandelt, wobei es vorteilhaft ist, wenn das Kraftwerk in einem Dauerbetrieb betrieben wird. Allerdings erfordern die Marktbedingungen, dass Kraftwerke zu häufigen, nicht geplanten Stillständen von nicht vorhersehbarer Dauer versetzt werden müssen.

Problematisch ist hierbei folgend beschriebener Sachverhalt. Sobald die Dampfturbine im Stillstand ist und Luft in der Dampfturbine vorhanden ist und die relative Luftfeuchtigkeit im inneren einer Dampfturbine einen Grenzwert überschreitet oder die Temperatur der Metallteile soweit abkühlt, dass die Metallteile die Taupunkttemperatur unterschreiten und ein Kondensatfilm sich bildet, kann es zu Korrosion an Dampfturbinen-Komponenten kommen.

Eine Dampfturbine umfasst Turbinenschaufel, die über Turbinenschaufelfüße am Rotor befestigt sind. Die Turbinenschaufelfußnuten gehören zu den am stärksten beanspruchten Bauteilen einer Dampfturbine, da dort hohe Betriebsspannungen auftreten. Dies ist vorzugsweise bei den Niederdruck-Schaufelfußnuten der Fall. Durch Korrosion verursachte Kerben können zur Rissbildung führen und somit die Lebensdauer der Komponenten herabsetzen.

Aktuelle Konzepte zur Vermeidung von Stillstandskorrosion sind für eher seltene Stillstände entwickelt, die in der Regel geplant sind und länger andauern. Bei einem solchen Konzept wird beispielsweise mittels getrockneter Luft eine Konservierung durchgeführt.

Die EP 2 700 076 und die EP 2 700 075 beschreiben jeweils ein Verfahren zur Konditionierung eines Kraftwerks. Dabei werden Amine dem Wasserdampfkreislauf zudosiert.

Für kurzfristige Stillstände wird für die Konservierung der Dampfturbine mit dem Fokus auf der Niederdruck-Teilturbine die Konditionierung mittels Amine, z.B. Octadecylamin (ODA) vor dem Abfahren der Dampfturbine angewendet. Die Konditionierung mittels Amine soll zur Bildung eines hydrophoben Aminfilms auf den Komponenten einer Niederdruck-Teilturbine führen und somit gegen Korrosion schützen. Wenn ein Amin vor dem Dampferzeuger von konventionellen Kraftwerken (z. B. GuD oder DKW) zudosiert wird, ist zu erwarten, dass nur ein kleiner Teil des zudosierten Amins tatsächlich im Bereich der Niederdruck-Teilturbine ankommt, da Amine üblicherweise bei Temperaturen größer als 450°C anfängt sich zu zersetzen. Dieser Nachteil könnte dadurch behoben werden, wenn das Amin über eine längere Zeit oder mit einer höheren Konzentration vor dem Dampferzeuger zudosiert wird. Allerdings bringt dies große wirtschaftliche und technische Nachteile, wie zum Beispiel hohe Konzentrationen, die zudosiert werden müssen, so dass ein Teil davon ohne sich zu zersetzen in der Niederdruck-Teilturbine ankommt, Aufkonzentration von Zersetzungsprodukten der Amine in den Teilturbinen, frühzeitige Ausschöpfung der Kondensatreinigungsanlage usw..

An dieser Stelle setzt die Erfindung an. Aufgabe der Erfindung ist es eine bessere Konditionierung mit Aminen aufzuzeigen.

Gelöst wird dies durch ein Verfahren zur Konditionierung des Wasser-Dampf-Kreislaufs eines Kraftwerks, wobei das Kraftwerk eine Dampfturbine umfassend eine Hochdruck-Teilturbine, eine Mitteldruck-Teilturbine und eine Niederdruck-Teilturbine, bei dem dem im Wasser-Dampf-Kreislauf zirkulierenden Arbeitsmedium ein Amin als Filmbildner zudosiert wird, das auf einer Oberfläche einen hydrophoben Film bildet, wobei das Amin vor der Niederdruck-Teilturbine zudosiert wird.

Unter dem Begriff "Konditionieren" ist hier eine Maßnahme zu verstehen, mit der die Oberfläche der Komponenten des Wasser-Dampfkreislaufes vor Korrosion geschützt wird.

Vorteilhafte Weiterbildungen sind in den Unteransprüchen angegeben.

Mit der Erfindung wird somit der Ansatz gewählt, die Amine nicht vor dem Dampferzeuger dem Wasser-Dampf-Kreislauf zuzudosieren, sondern im Wesentlichen direkt vor der Niederdruck-Teilturbine.

Die Einteilung Hochdruck-, Mitteldruck und Niederdruck-Teilturbine erfolgt folgendermaßen. Der nach dem Dampferzeuger zur Verfügung gestellte Frischdampf weist die höchsten Dampfparameter (u.a. Temperatur und Druck) auf und strömt zunächst durch die Hochdruck-Teilturbine. Nach der Hochdruck-Teilturbine strömt der Dampf zu einem Zwischenüberhitzer. Dort wird der Dampf erhitzt und strömt anschließend zu einer Mitteldruck-Teilturbine. Nach der Mitteldruck-Teilturbine strömt der Dampf über eine Überströmleitung zu der Niederdruck-Teilturbine.

Das Amin, insbesondere Octadecylamin (ODA) wird kurz vor der Niederdruck-Teilturbine in den Wasser-Dampf-Kreislauf zudosiert und führt zu einer Filmbildung im Bereich der am höchsten belasteten Schaufelfußnuten und führt dadurch zu einem besseren Korrosionschutz während eines Stillstandes. Der Stillstand kann von kurzer Dauer sein und liegt im Bereich von Tagen.

Die Temperatur des Dampfes vor der Niederdruck-Teilturbine liegt unter der Zersetzungstemperatur für Amine, insbesondere Octadecylamine (ODA). Somit wird eine Zersetzung der Amine nicht erwartet.

Die Effizienz bezüglich der Bildung eines Schutzfilms wird dadurch deutlich gesteigert, so dass die gesamte Konzentration von Aminen, insbesondere Octadecylamin (ODA) oder die Dosierdauer reduziert werden kann.

Durch die geringere Konzentration des Amins, insbesondere Octadecylamin (ODA) im Wasser-Dampf-Kreislauf, wird die Belastung der Kondensatreinigungsanlage reduziert. Zusätzlich wird die Menge der Zersetzungsprodukte nach dem Dampferzeuger reduziert.

Die Dosierung kann bei einem Herunterfahren der Dampfturbine mit kurzen Vorlaufzeiten erfolgen. Eine kontinuierliche Dosierung ist hierbei nicht erforderlich. Eine weitere Möglichkeit, Amine direkt im Bereich der Schaufelfußnuten anzuwenden, ist über die Haubeneinspritzung möglich.

Bei der Dosierung über die Haubeneinspritzung ist der Betrieb der Dampfturbine im Prinzip nicht erforderlich. Damit wäre eine Konservierung der kritischen Bereiche einer Niederdruck-Teilturbine auch dann möglich, wenn kein Dampf vorhanden ist. Beispielsweise bei einer Inbetriebsetzung.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Gleiche Bauteile oder Bauteile mit gleicher Funktion sind dabei mit gleichen Bezugszeichen gekennzeichnet.

Ausführungsbeispiele der Erfindung werden nachfolgend anhand der Zeichnungen beschrieben. Diese soll die Ausführungsbeispiele nicht maßgeblich darstellen, vielmehr ist die Zeichnung, wo zur Erläuterung dienlich, in schematisierter und/oder leicht verzerrter Form ausgeführt.

Im Hinblick auf Ergänzungen der in der Zeichnung unmittelbar erkennbaren Lehren wird auf den einschlägigen Stand der Technik verwiesen.

Es zeigen:
- Figur 1: eine schematische Darstellung eines Wasser-Dampf-Kreislaufes
- Figur 2: eine schematische Darstellung einer Niederdruck-Teilturbine

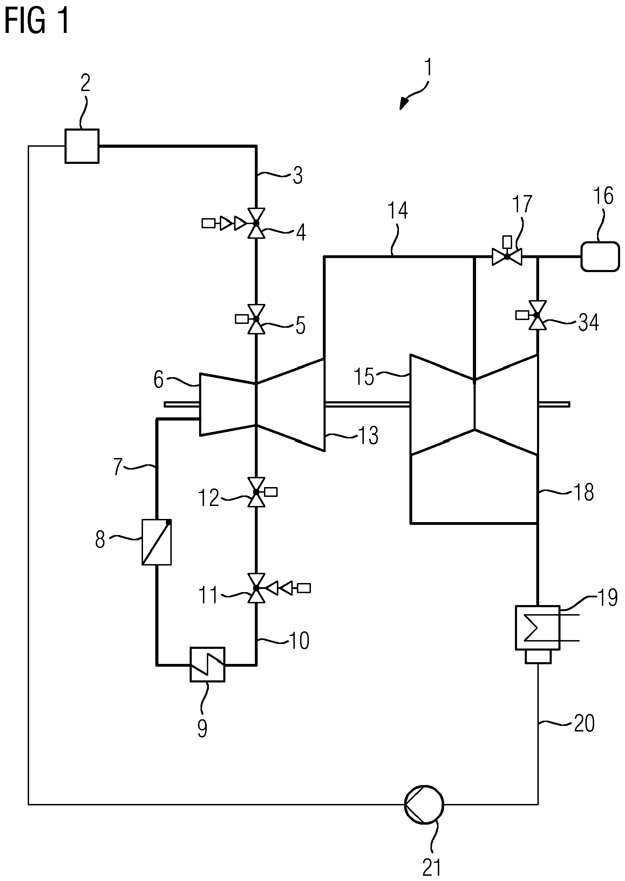

Die Figur 1 zeigt eine schematische Darstelllung eines Wasser-Dampf-Kreislaufes 1. In einem Dampferzeuger 2 wird ein Dampf durch die Benutzung eines Brennstoffes, wie beispielsweise Kohle, Mineralöle oder Gas hergestellt. Der im Dampferzeuger hergestellte Dampf weist hohe Dampfparameter wie Druck und Temperatur auf und wird somit als Hochdruckdampf bezeichnet. Der Hochdruckdampf strömt über eine Frischdampfleitung 3 zunächst durch ein Schnellschlussventil 4 und anschließend durch ein Stellventil 5 in eine Hochdruck-Teilturbine 6.

In der Hochdruck-Teilturbine 6 wird die thermische Energie des Dampfes in mechanische Energie umgewandelt, wodurch ein nicht näher dargestellter Rotor in eine Drehung versetzt werden kann. Die Drehung erfolgt bei 50Hz oder 60Hz.

Die Temperatur und der Druck des Dampfes nach Durchströmen der Hochdruck-Teilturbine 6 verringern sich dabei. Nach der Hochdruck-Teilturbine strömt der abgekühlte Dampf als Zwischenüberhitzerdampf in einer Zwischenüberhitzerleitung 7 durch eine Klappe 8 zu einem Zwischenüberhitzer 9. In dem Zwischenüberhitzer 9 wird der Dampf erhitzt und strömt anschließend als heißer Zwischenüberhitzerdampf in einer heißen Zwischenüberhitzerleitung 10 zunächst durch ein Mitteldruck-Schnellschlussventil 11 und anschließend durch ein Mitteldruck-Stellventil 12 in eine Mitteldruck-Teilturbine 13.

In der Mitteldruck-Teilturbine 13 wird die thermische Energie des Dampfes in mechanische Energie umgewandelt.

In der in Figur 1 dargestellten Ausführungsform sind die Hochdruck 6- und Mitteldruck-Teilturbine 13 innerhalb eines gemeinsamen Gehäuses (nicht näher dargestellt) angeordnet. Alternativ dazu kann die Hochdruck-Teilturbine 6 und die Mitteldruck-Teilturbine 13 in jeweiligen separaten Gehäusen ausgebildet werden.

Nach der Mitteldruck-Teilturbine 13 strömt der Dampf durch eine Überströmleitung 14 in eine Niederdruck-Teilturbine 15. Die Niederdruck-Teilturbine 15 ist zweiflutig ausgeführt.

In der Niederdruck-Teilturbine 15 wird die thermische Energie des Dampfes in mechanische Energie umgewandelt.

Kurz vor dem Eintritt des Dampfes in die Niederdruck-Teilturbine 15 wird über eine Amine-Dosiereinheit 16 und einem Dosierventil 17 eine bestimmte Menge an Aminen, insbesondere Octadecylamin (ODA) in die Überströmleitung zudosiert bzw. zugeführt.

Das Amin, insbesondere Octadecylamin (ODA) wird als Filmbildner zudosiert, das auf einer Oberfläche einen hydrophoben Film bildet.

Das Amin, insbesondere Octadecylamin (ODA) wird vor dem Abfahren des Kraftwerks zudosiert. Mit Abfahren ist der Zustandswechsel vom Lastbetrieb in einen lastlosen Betrieb zu verstehen. Dabei kann die Dampfzufuhr in die Dampfturbine geändert werden.

Alternativ dazu wird das Amin, insbesondere Octadecylamin (ODA) während des Abfahrens zudosiert.

Alternativ dazu wird das Amin, insbesondere Octadecylamin (ODA) während eines Stillstandes durch die Haubeneinspritzung zudosiert. Im Stillstand strömt kein Dampf durch die Dampfturbine.

Durch das Zudosieren von Aminen, insbesondere Octadecylamin (ODA) bildet sich ein Schutzfilm auf den Komponenten der Niederdruck-Teilturbine.

Nach der Niederdruck-Teilturbine 15 strömt der Dampf über eine Abdampfleitung 18 in einen Kondensator 19. Im Kondensator 19 wird der Dampf in Wasser umgewandelt und über eine Leitung 20 mit einer Pumpe 21 wieder dem Dampferzeuger zugeführt. Der Wasser-Dampf-Kreislauf 1 ist dadurch geschlossen.

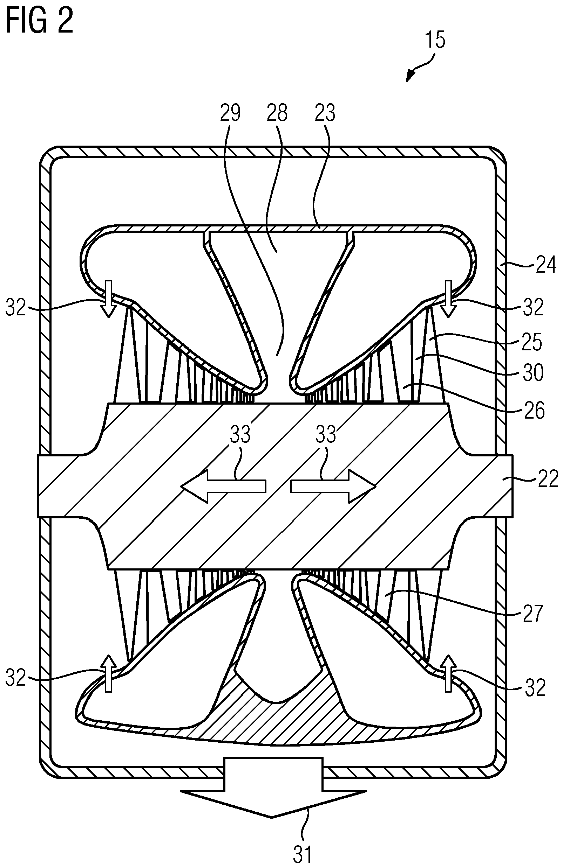

Die Figur 2 zeigt eine weitere Möglichkeit das Amin, insbesondere Octadecylamin (ODA) in den Wasser-Dampf-Kreislauf 1 zu bringen.

Die Figur 2 zeigt eine schematische Querschnittansicht einer Niederdruck-Teilturbine 15 und umfasst einen drehbar gelagerten Rotor 22. Um den Rotor 22 ist ein Innengehäuse 23 angeordnet. Um das Innengehäuse 23 ist ein Außengehäuse 24 angeordnet.

Auf dem Umfang des Rotors 22 sind Turbinenschaufeln 25 angeordnet. Aus Gründen der Übersichtlichkeit ist lediglich eine Turbinenschaufel 25 mit dem Bezugszeichen 25 versehen. Die Turbinenschaufeln 25 werden auch als Turbinenlaufschaufeln bezeichnet.

An einem Innen-Umfang des Innengehäuses 23 sind Turbinenschaufeln 26 angeordnet. Aus Gründen der Übersichtlichkeit ist lediglich eine Turbinenschaufel 26 mit dem Bezugszeichen 25 versehen. Die Turbinenschaufeln 26 werden auch als Turbinenleitschaufeln bezeichnet.

Eine Reihe Turbinenleitschaufeln und Turbinenlaufschaufeln wird auch als Schaufelstufe bezeichnet.

Der abwechselnd aus Turbinenlaufschaufeln und Turbinenleitschaufeln gebildete Bereich bildet den Strömungskanal 27 durch den ein Dampf im Betrieb strömt.

Der Dampf strömt hierbei über einen Dampfstutzen 28 in einen Einströmbereich 29. Von dort strömt der Dampf durch den Strömungskanal 27 zu einer letzten Schaufelstufe 30.

Nach der letzten Schaufelstufe 30 strömt der Dampf über einen Abdampfstutzen 31 aus der Niederdruck-Teilturbine 15 heraus zu einem Kondensator 19.

Die Niederdruck-Teilturbine 15 ist mit einer Amine-Dosier-Einheit ausgebildet, mit der Amine, insbesondere Octadecylamin (ODA) in die Niederdruck-Teilturbine 15 zugeführt werden kann. Die Dosier-Einheit umfasst eine Dosierzuströmung 32, die nach der letzten Schaufelstufe 30 im Innengehäuse 23 angeordnet ist.

Als alternative Ausführungsform kann die Haubeneinspritzung der Niederdruck-Teilturbine als Dosierzuströmung 32 verwendet werden. Üblicherweise wird die Haubeneinspritzung für das Einspritzen von Wasser benutzt, kann aber in Ausnahmefällen mit Dampf benutzt werden.

Die Dosierzuströmung 32 kann hierbei derart ausgebildet sein, dass die Zuführung des Amins, insbesondere Octadecylamins (ODA) gegen eine Strömungsrichtung 33 des im Strömungskanal 27 strömenden Dampfes gerichtet ist.

Die Beschreibung bezieht sich auf eine Niederdruck-Teilturbine 15. Die Erfindung kann auch in einer Mitteldruck-Teilturbine 13 eingesetzt werden. Die Dosierzuströmung 32 kann demnach auch nach einer letzten Stufe in der Mitteldruck-Teilturbine 13 angeordnet werden.

Die Dosier-Einheit wird hierbei mit einer Automatisierungseinheit angesteuert, um die Dosiermenge an Aminen, insbesondere Octadecylamin (ODA) zu regeln.

Die Amine-Dosiereinheit 16 ist mit einem weiteren Ventil 34 ausgestattet, um das Amin, insbesondere Octadecylamin (ODA) auch zu der Niederdruck-Teilturbine 15 zu führen, wo es nach einer letzten Schaufelstufe 30, wie in Figur 2 beschrieben, zugeführt wird.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur Konditionierung des Wasser-Dampf-Kreislaufs (1) eines Kraftwerks,
wobei das Kraftwerk eine Dampfturbine (6,13,15) umfassend eine Hochdruck-Teilturbine (6), eine Mitteldruck-Teilturbine (13) und eine Niederdruck-Teilturbine (15), bei dem dem im Wasser-Dampf-Kreislauf (1) zirkulierenden Arbeitsmedium ein Amin als Filmbildner zudosiert wird, das auf einer Oberfläche einen hydrophoben Film bildet, **dadurch gekennzeichnet, dass**
das Amin vor der Niederdruck-Teilturbine (15) zudosiert wird.

2. Verfahren nach Anspruch 1,
bei dem das Kraftwerk abgefahren wird und das Amin vor dem Abfahren zudosiert wird.

3. Verfahren nach Anspruch 1,
bei dem das Kraftwerk abgefahren wird und das Amin während des Abfahrens zudosiert wird.

4. Verfahren nach Anspruch 1,
bei dem die Dampfturbine (6,13,15) sich im Stillstand befindet und das Amin während des Stillstandes zudosiert wird.

5. Verfahren nach einem der vorhergehenden Ansprüche, wobei das Kraftwerk eine Überströmleitung (14) von der Mitteldruck-Dampfturbine (13) zur Niederdruck-Teilturbine (15) umfasst und das Amin in der Überströmleitung (14) zudosiert wird.

6. Verfahren nach Anspruch 5,
wobei das Amin kurz vor der Niederdruck-Teilturbine (15) zudosiert wird.

7. Verfahren nach einem der Ansprüche 1 bis 4,
wobei das Amin in der Niederdruck-Teilturbine (15) nach einer Schaufelstufe zudosiert wird.

8. Verfahren nach Anspruch 7,
wobei das Amin nach der letzten Schaufelstufe (30) zudosiert wird.

9. Verfahren nach Anspruch 8,
wobei das Amin durch eine Haubeneinspritzung zudosiert wird.

10. Verfahren nach einem der Ansprüche 7 bis 9,
wobei das Amin gegen eine Strömungsrichtung (33) des im Strömungskanal (27) strömenden Arbeitsmedium gerichtet ist.
